# EUROPEAN PATENT SPECIFICATION

(11) **EP 4 134 226 B1**
(45) Date of publication and mention of the grant of the patent: **07.10.2026**
(21) Application number: 21306113.8
(22) Date of filing: 11.08.2021
(51) Int. Cl.: B29D 11/00, B29C 64/00, B29C 64/171, B29C 64/106

(54) **MANUFACTURING SYSTEM CONFIGURED TO CARRY OUT A METHOD FOR ADDITIVELY MANUFACTURING A PLURALITY OF OPHTHALMIC DEVICES AND SUCH A METHOD**
HERSTELLUNGSSYSTEM, KONFIGURIERT ZUM DURCHFÜHREN EINES VERFAHRENS ZUR GENERATIVEN FERTIGUNG EINER VIELZAHL OPHTHALMISCHER VORRICHTUNGEN UND EIN SOLCHES VERFAHREN
SYSTÈME DE FABRICATION CONFIGURÉ POUR METTRE EN UVRE UN PROCÉDÉ DE FABRICATION ADDITIVE D'UNE PLURALITÉ DE DISPOSITIFS OPHTALMIQUES ET UN TEL PROCÉDÉ

(43) Date of publication of application: 15.02.2023
(73) Proprietor: ESSILOR INTERNATIONAL, 94220 Charenton-Le-Pont (FR)
(72) Inventor: LECOMPERE, Maxime, 94700 MAISONS -ALFORT (FR); HUPREL, Laurent, 94140 ALFORTVILLE (FR); LEITE, Pierre, 91650 BREUILLET (FR)
(74) Representative: Santarelli

(56) References cited:
- EP-A1- 3 626 428
- EP-A2- 3 566 869
- WO-A1-2020/201581
- US-A1- 2018 272 598

## Description

### FIELD OF THE DISCLOSURE

The disclosure relates to a manufacturing system configured to carry out a method for additively manufacturing a plurality of ophthalmic devices and such a method for additively manufacturing such a plurality of ophthalmic devices.

### BACKGROUND ART

Known methods for additively manufacturing a plurality of ophthalmic lenses comprise curing steps and layering steps which are performed successively in a manufacturing system which comprises a curing device, a layering device and a building platform located in relation to a vat filled with a predetermined material.

For instance, the plurality of ophthalmic lenses are built layer by layer on the building platform which is movable relative to the vat including a volume of the predetermined material. The building platform is located in a predetermined position, the curing device including an irradiation source performs the curing step of a first layer of material, the layering device performs the layering step at least thanks to a displacement of the building platform so that a novel layer of material having a predetermined thickness can be cured, etc.

In other words, in such known methods, a curing step is performed on a layer which is for instance liquid for the plurality of ophthalmic lenses to be manufactured on the building platform. The liquid layer is thus hardened and next a layering step is performed for forming a novel liquid layer on the previous hardened layer of the plurality of ophthalmic lenses to be manufactured.

However, the layering step may often require a substantial process time compared to the curing step, especially in the field of additively manufacturing ophthalmic lenses where an optical quality corresponding at least to a high resolution is required.

In view of mass production requirements, some manufacturing systems comprise a plurality of curing device in order to cure a larger area on the building platform in a single curing step.

EP 3 626 428 discloses to use a light source for curing liquid resin more efficiently, and in particular to use sequentially a curing device from a container to the other when a moving plate of the previous container is moved.

### SUMMARY OF THE DISCLOSURE

The disclosure is directed to a manufacturing system configured to carry out a method for additively manufacturing a plurality of ophthalmic devices, and to the method for additively manufacturing a plurality of ophthalmic devices including curing and layering steps.

The disclosure accordingly provides a manufacturing system configured to carry out a method for additively manufacturing a plurality of ophthalmic devices, the manufacturing system comprising at least one tank filled with a volume of a predetermined material, a single curing device configured for curing volumes of the predetermined material so as to harden layers of the ophthalmic devices to be manufactured, a layering device configured for layering volumes of the predetermined material onto harden layers of the ophthalmic devices to be manufactured, wherein the manufacturing system comprises a determined number of building platforms movable relative to the at least one tank and on which are supported the ophthalmic devices to be manufactured, the number of building platforms being determined at least in function of the predetermined material, a curing time for the single curing device to cure a volume of the predetermined material to form a hardened layer of at least one ophthalmic device, and a layering time for the layering device to provide a volume of the predetermined material to form a subsequent layer to be hardened of at least one ophthalmic device; the number of building platforms being determined so that the layering device and the single curing device are able to perform respectively a curing step and a layering step simultaneously on layers of different ophthalmic devices.

Thanks to the manufacturing system according to the disclosure, it is possible to additively manufacture a plurality of layers of a predetermined material on different building platforms with the same and single curing device and thanks to curing and layering steps which are performed at least partially at the same time but on different building platforms and thus for different ophthalmic devices.

The single curing device is used successively for performing at least one curing step on each of said building platforms.

The number of building platforms can be determined so that there is no need to wait to perform curing steps of the new layer(s) n of all the ophthalmic devices on the buildings platforms before beginning the layering of new layers n+1, so that the production time can thus be reduced.

The curing steps (for the layer n of an individual device to manufacture) take generally less time than the layering steps, so that the curing steps can be made continuously or sequentially, excluded or not a displacement time of the curing device, from a layer on a building platform to the subsequent layers on the subsequent building platforms, platform by platform and layer by layer. Regarding the disclosure, this is further true for curing all the layers n of the devices to manufacture present on a same building platform.

The layering steps depends of the process time for layering a layer on the building platform compared to the process time for curing a building platform. The layering steps can be made continuously or sequentially, platform by platform and/or simultaneously on several platforms.

Such process times are thus useful for determining the number of building platforms.

The manufacturing system may comprise a plurality of building platforms distinct and movable relative to each other and to the at least one tank.

The manufacturing system may be configured so that the single curing device is able to perform a curing step on one or several building platforms while the layering step is able to perform a layering step on one or several others building platforms.

The manufacturing system may comprise a determined number of layering devices, the number of layering devices being determined in function of the number of building platforms, the curing device, the curing time and the layering time.

The manufacturing system may comprise a layering device dedicated to each or several building platforms.

The at least one tank may comprise one or a plurality of compartments and at least one building platform is movable relative to a dedicated compartment.

Each building platform may comprise a determined size and a determined shape, the size and the shape of the building platform being determined in function of a number of ophthalmic devices to be manufactured and/or at least a shape of said ophthalmic devices, and in relation to the curing time and/or the layering time.

The manufacturing system may comprises a processing unit which is configured to process data about the predetermined material(s), the number of building platforms and/or the size and the shape of each building platform, and/or the number of layering devices, and/or the curing time and/or the layering time, and to provide an optimized arrangement of the manufacturing system.

The manufacturing system may comprises interchangeable modules comprising at least a building platform and optionally a dedicated layering device and/or a compartment of the tank, the number and the type of modules being determined in function of the optimized arrangement.

The single curing device may be formed by a digital light processing unit and/or a stereolithography unit including a laser source and a scanning head.

The layering device may be formed by a transparent window with optionally a membrane located in the at least one tank in front of the building platform; or by a provider of additional material such as a recoater, or at least one print head, or a at least one nozzle.

The disclosure further provides a method for additively manufacturing a plurality of ophthalmic devices, the method being carried out using the manufacturing system described above and comprising the steps of: curing a first volume of a predetermined material on a first building platform so as to harden a layer of one or several ophthalmic devices to be manufactured and supported on said first building platform; next curing a second volume of the predetermined material on a second building platform which is distinct and movable relative to the first building platform, so as to harden a layer of one or several other ophthalmic devices to be manufactured and supported on said second building platform, said curing steps being performed successively by a single curing device; and layering a second volume of the predetermined material adjacent to the hardened layer located on said first building platform, said layering step being performed, thanks to a layering device and to a displacement of said first building platform together with the hardened layer, at the latest when the curing of the layer of said one or several ophthalmic devices supported on said first building platform is finished and during the step of curing the layer of said one or several another ophthalmic devices supported on said second building platform.

The method according to the disclosure thus comprises the step of additively manufacturing a plurality of layers of a predetermined material on different building platforms with the same and single curing device and thanks to curing and layering steps which are performed at least partially at the same time but on different building platforms and thus for different ophthalmic devices.

The single curing device is used successively for performing a curing step on each of said building platforms.

Thanks to the disclosure, there is no need to wait for the complete curing of all the layers of all the ophthalmic devices on the building platforms before beginning the layering, so that the production time can thus be reduced.

The method is iterative and when the first volume of the predetermined material on the last building platform has been cured, then a second volume of the predetermined material on the first building platform can be cured, etc.

It is to be noted that the curing steps, for curing the layer of one ophthalmic device, or according to embodiments of the disclosure, for curing the layers of ophthalmic devices present on a same building platform, takes generally less time than the layering steps, so that the curing steps can be made continuously, excluded or not the displacement time of the curing device, from the first layer on the first building platform to the subsequent layers on the subsequent building platforms, platform by platform and layer by layer.

Regarding the layering steps, it depends of the process time for layering a building platform compared to the process time for curing a building platform. The layering steps can in some cases be made continuously or sequentially, platform by platform and/or simultaneously on several platforms.

In the method subject-matter of the disclosure, the building platforms are duplicated so as to have more than one building platform and the layering steps are dedicated to the building platforms so that the layering steps are also duplicated and can be performed independently from each other on their respective platform, notably even if a curing step is performing in another platform, or if a curing step hasn't even started on another third platform.

Because the layering step of a building platform begins at the latest when the curing step of this building platform is finished, and depending of the number of platforms, curing process time and layering process time, some waiting time might happen or be added before curing a novel layer on the same platform and after the layering step. During such waiting time, the previous layer which has been hardened by the curing and which may continue to slightly harden is recovered by a volume of predetermined material due to the subsequent layering during said possible continuation of hardening.

The layering step may have a same duration for each layer of the ophthalmic devices manufactured on the building platforms.

The steps of curing may be performed by projecting and/or scanning and polymerizing at least one image on a surface of a volume of the predetermined material.

Depending on the curing device, the steps of curing may be performed in a step mode, or in a scroll mode, or in a hatching or hatched mode.

The curing device may be formed by a digital light processing unit and/or a stereolithography unit including a laser source and a scanning head.

The building platforms are distinct and movable relative to each other and to the at least one tank.

A number of layering devices may be determined in function of the number of building platforms, the curing time and the layering time.

A layering device may be dedicated to each or several building platforms.

The at least one tank may comprise one or a plurality of compartments and at least one building platform may be movable relative to a dedicated compartment.

Each building platform may comprise a determined size and a determined shape, the size and the shape of the building platform being determined in function of a number of ophthalmic devices to be manufactured and/or at least a shape of said ophthalmic devices, and in relation to the curing time and/or the layering time.

The steps of layering, curing and displacing the building platforms may be commanded, controlled and/or operated by a processing unit which is configured to process data about the predetermined material, the number of building platforms and/or the size and the shape of each building platform, and/or the number of layering devices, and/or the curing time and/or the layering time, and to provide an optimized arrangement of the manufacturing system.

The method may comprise the step of selecting interchangeable modules comprising at least a building platform and optionally a dedicated layering device and/or a compartment of a tank, the number and the type of modules being determined in function of the optimized arrangement.

The layering device may be formed by a transparent window and optionally a membrane located in the at least one tank in front of the building platform; or by a provider of additional material such as a recoater, or a print head, or a nozzle.

### BRIEF DESCRIPTION OF THE DRAWINGS

The description of the disclosure now continues with a detailed description of embodiments given hereinafter by way of non-limiting example and with reference to the appended drawings.
Figure 1 represents schematically a manufacturing system configured to carry out a method for additively manufacturing a plurality of ophthalmic devices.
Figure 2 represents schematically and partially the manufacturing system of Figure 1 in which a plurality of ophthalmic devices are additively manufactured.
Figure 3 shows schematically different steps of a method for additively manufacturing a plurality of ophthalmic devices thanks to the manufacturing system of Figures 1 and 2.
Figure 4 is a view similar to Figure 3 but illustrated in the shape of a bloc diagram.
Figure 5 illustrates other steps of the method for optimizing an arrangement of the manufacturing system.

### DETAILED DESCRIPTION OF EXAMPLE EMBODIMENTS

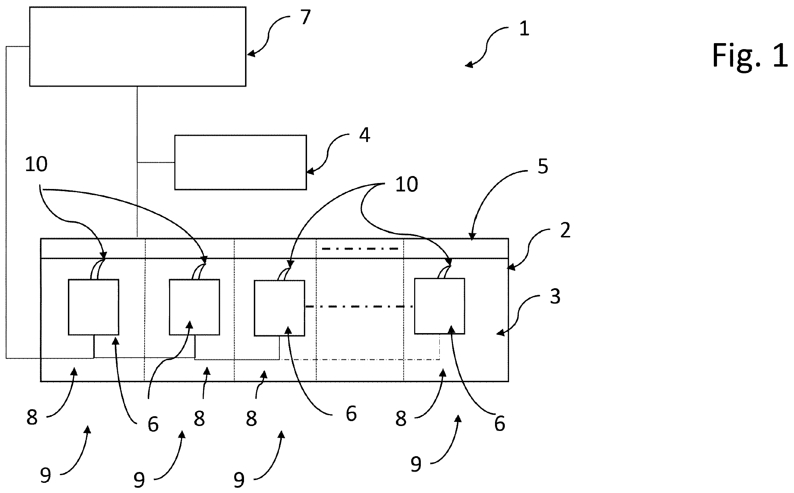

Figure 1 shows schematically a manufacturing system 1 configured to carry out a method for additively manufacturing a plurality of ophthalmic devices 10.

For instance, the ophthalmic devices 10 are ophthalmic lenses and in particular spectacle lenses.

The system 1 comprises at least one tank 2 filled with a volume of a predetermined material 3, such as a polymer resin.

The system 1 comprises a single curing device 4 configured for curing volumes of the predetermined material so as to harden layers of the ophthalmic devices 10 to be manufactured.

The single curing device 4 can be formed by a digital light processing (DLP) unit having one or several projector heads and/or a stereolithography unit including one or several laser sources and a scanning heads.

The single curing device 4 can thus be configured to perform curing steps in a step mode, or in a scroll mode, or in a hatching mode, depending of the type of device.

In the step mode, the single curing device 4 projects successive images in successive locations, step by step, and between two locations, the single curing device 4 generally does not project any image. In the scroll mode, the images are continuously refreshed in relation to the displacement of the single curing device 4 along each building platform 6. In the hatching mode, the single curing device 4 projects a single spot with a given spot size and will scan the entire cross sections of the parts to be built in a building platform taking into account the spot size and a given hatch spacing. It will continue with the next build platform in the same way.

The system 1 comprises one or a plurality of layering devices 5 configured for layering volumes of the predetermined material 3 onto harden layers of the ophthalmic devices 10 to be manufactured.

The layering device(s) 5 can be formed by one or several transparent windows and optionally a membrane located in the at least one tank 2 in front of a respective building platform 6; or by one or several providers of additional material such as recoater(s), or print head(s), or nozzle(s).

The system 1 comprises a determined number of building platforms 6 movable relative to the at least one tank 3 and on which are supported the ophthalmic devices 10 to be manufactured.

The building platforms 6 are distinct and movable relative to each other and to the at least one tank 2.

Each building platform 6 comprises a determined size and a determined shape and thus may comprise a determined number of ophthalmic devices 10.

The system 1 further comprises a control and command unit 7, also called processing unit, which is configured to control, command and/or operate the single curing device 4, the layering device 5 and each of the building platforms 6.

For instance, the processing unit 7 is able to control an operable time of the single curing device, also called curing time, an operable time of the layering device 5, also called layering time, and the displacement of each the building platforms 6 for manufacturing the layers of the ophthalmic devices 10.

To be noted that the curing time comprises a period during which the material is polymerised, or upon exposure, and may or not comprise a previous period during which the images are loaded into the single curing device 4.

To be noted also that once the exposure is finished, the polymerization, or curing, does not stop immediately but rather continues for a period. Such period can be called dark polymerization period, for which the kinetics, and amount of additional curing even after the exposure is finished, depends at least on a curing type of the predetermined material and on its composition.

On the basis that the curing steps take generally less time than the layering steps for any given platform, the curing steps can be made continuously, or sequentially, along the building platforms 6, excluded or not the displacement time of the single curing device 4. The layering steps is performed depending on the layering time for layering a building platform compared to the curing time for curing a building platform. The layering steps can be made continuously, platform by platform and/or simultaneously on several platforms.

The disclosure however states that at least for two different platforms, or for at least two different sets of devices to manufacture, the layering steps happen at different times, whether part of the process time overlaps or not.

The number of building platforms 6 are determined at least in function of the predetermined material 3, the curing time for the single curing device 4 to cure a volume of the predetermined material 3 to form a hardened layer of at least one ophthalmic device 10, and the layering time for the layering device(s) 5 to provide a volume of the predetermined material to form a subsequent layer to be hardened of at least one ophthalmic device 10.

To be noted that the predetermined material 3 has intrinsic properties such as viscosity, refractive index, etc.

The size and the shape of the building platform 6 can be determined in function of the number of ophthalmic devices 10 to be manufactured and/or at least a shape of the ophthalmic devices 10, including for instance the diameter, the outline, the curvature, the thickness and/or the spatial and/or printing orientation of the ophthalmic devices 10 on the building platforms 6.

The size and the shape of the building platform 6 can also be determined in relation to the curing time and/or to the layering time of at least a layer of an ophthalmic device 10.

The number of building platforms 6 and optionally its shape and its size are determined so that the layering device(s) 5 and the single curing device 4 are able to perform respectively a curing step and a layering step simultaneously on layers of different ophthalmic devices 10.

The system 1 allows to additively manufacture a plurality of layers of the predetermined material 3 on different building platforms 6 with the same and single curing device 4 and thanks to curing and layering steps which are performed at least partially at the same time but on different building platforms 6 and thus for different ophthalmic devices 10.

The number of building platforms 6 can be determined so that there is no need to wait for the complete curing of all the layers of the ophthalmic devices 10 on the buildings platforms 6 before beginning the layering, so that the production time can thus be reduced.

In other words, the single curing device 4 is able to perform a curing step on one or several building platforms 6 while the layering step is able to simultaneously perform a layering step on one or several others building platforms 6.

Thus in the machine and/or process of the disclosure, instead of having either the curing device working or the layering device working, at most times both the curing device and at least one layering device are working.

In addition, as stated above, several layering devices 5 can be used, each being dedicated to one or several building platforms 6.

The number of layering devices 5 can be determined in function of the number of building platforms 6, the curing time and the layering time of at least a layer of an ophthalmic device 10.

Thus, the system 1 comprises interchangeable modules 9 comprising at least one of the building platforms 6 and optionally a dedicated layering device 5 and/or a compartment 8 of the tank 2.

The processing unit 7 can be configured to process data about the predetermined material 3, the number of building platforms 6 and/or the size and the shape of each building platform 6, and/or also the number of layering devices 5, and/or the curing time and/or the layering time, and then to provide an optimized arrangement of the system 1.

Such optimized arrangement may be defined by a number and a type of modules 9.

The optimized arrangement of the system can be highly favourable to optimize the curing path and then the layering path. In particular, that can allows rendering a frequency of the exposure over the tank homogeneous, including all the ophthalmic devices 10 manufactured. Such homogenous exposure may improve the control of the curing of the material 3 and in particular the resin conversion induced by the polymerisation, including during the curing time and the dark polymerisation period.

For instance, the frequency of exposure and/or the duration of dark polymerization can be homogenous within one device and across all the devices so as to have mechanical and optical properties as repeatable and as controlled as possible.

In addition, using such modules 9 is a benefit for the process because any module can be loaded and/or unloaded without impacting the processing on the other modules 9, for instance for maintenance, or for unloading a module 9 in which the ophthalmic devices 10 are finished and loading a new module 9 with a new platform ready for starting to manufacture a new product.

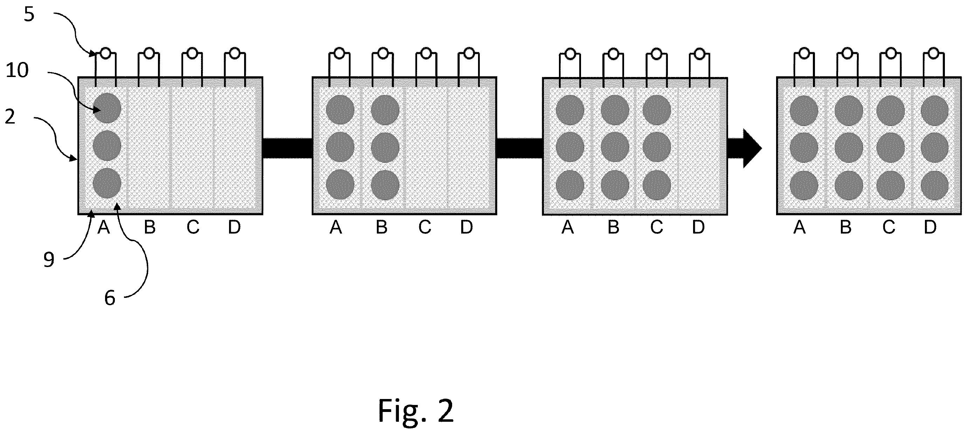

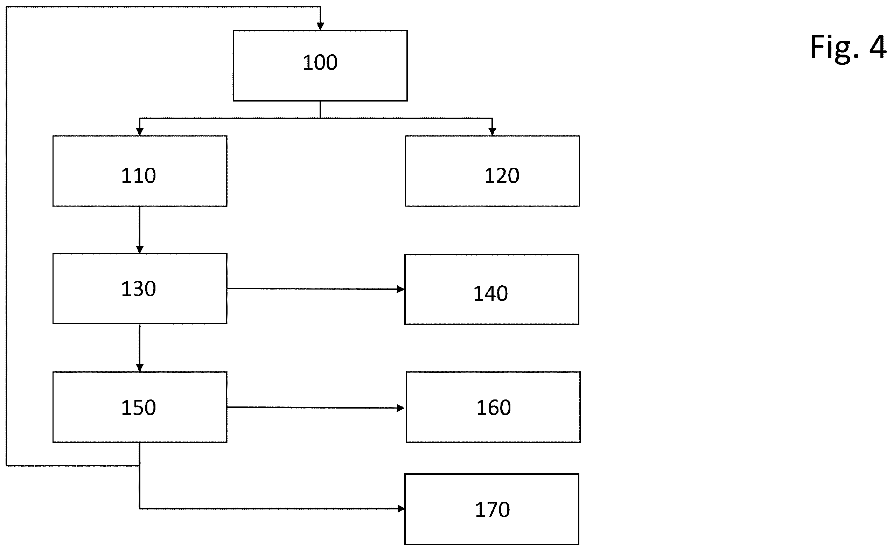

Figures 2 to 4 illustrate a method for additively manufacturing a plurality of ophthalmic devices thanks to the system 1, respectively schematically and with bloc diagrams.

The system 1 comprises a single tank 1 in which are located four modules 9, each comprising one building platform 6 and a dedicated layering device 5, while the single curing device is not visible. The number of four modules is illustrative for the process in place.

The size and the shape of each building platform 6 are defined so that three ophthalmic devices 10 can be manufactured on each of them.

The building platforms 6 thus define manufacturing areas noted A to D on the drawings of Figures 2 to 4.

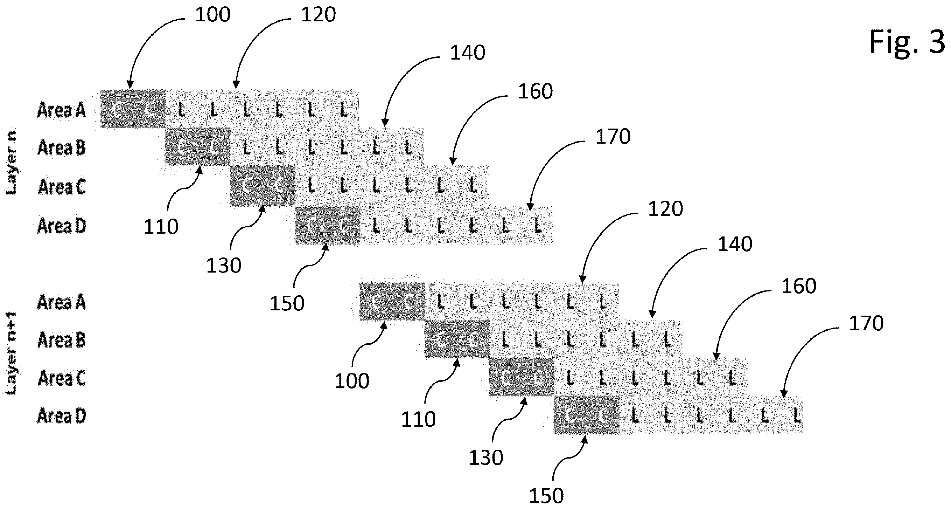

The method comprises a step 100 of curing a first layer, noted layer n on Figures 3 of the area A, during a determined curing time "C".

The curing time C is noted as corresponding to two time units on Figure 3.

Next, the method comprises a step 110 of curing a first layer n of the area B, during the determined curing time C.

In parallel of step 110, the method further comprises a step 120 of partially layering the first layer n of area A, during the curing of area B.

The layering step if performed during a layering time L corresponding to six time units on Figure 3.

Next, the method comprises a step 130 of curing a first layer n of the area C, during the determined curing time C.

In parallel of step 130, the method further comprises both step 120 of partially layering the first layer n of area A and a step 140 of partially layering the first layer n of area B, during the curing of area C.

Next, the method comprises a step 150 of curing a first layer n of the area D, during the determined curing time C.

In parallel of step 150, the method further comprises both step 120 of partially layering the first layer n of area A, step 140 of partially layering the first layer n of area B, and a step 160 of partially layering the first layer n of area C, during the curing of area D.

When the curing step 150 is finished, the method further comprises a further layering step 170 of partially layering the first layer n of area D

When the curing of the first layers n of the ophthalmic devices 10 on the building platforms 6 corresponding to areas A to D is finished, the method reboots to step 100 for the layer n+1 etc.

Figure 3 shows the manufacturing of layers n and n+1, including curing and layering steps described above, which are performed successively and continuously.

It is noted that curing a layer includes curing a determined volume of the predetermined material so as to harden the dedicated layer.

As shown on Figures 2 and 3, the method thus comprises the step of additively manufacturing a plurality of layers n, n+1 of the predetermined material on different building platforms 6 with the same and single curing device and thanks to curing and layering steps which are performed at least partially at the same time but on different building platforms and thus for different ophthalmic devices 10.

In other words, there is no need to wait for the complete curing of all the layers of the ophthalmic devices on the buildings platforms before beginning the layering, so that the production time can thus be reduced.

The method is iterative and when the first volume of the predetermined material on the last building platform has been cured, then a second volume of the predetermined material on the first building platform can be cured, etc.

Because the layering step of a building platform begins at the latest when the curing step of this building platform is finished, and depending of the number of platforms, curing process time and layering process time, some waiting time might be added before curing a novel layer on the same platform. During such waiting time, that can be equated to a dark polymerisation period as described above or not, the previous layer is hardened and recovered by a volume of predetermined material.

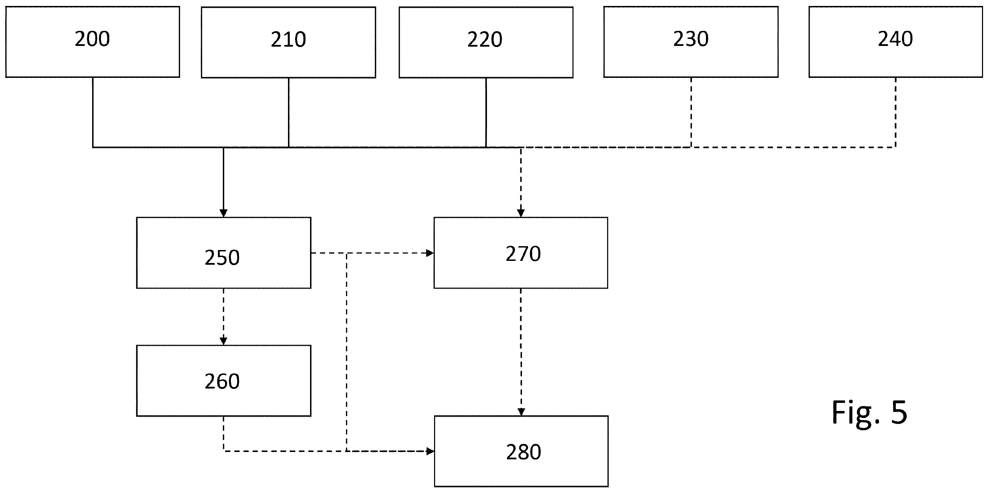

Figure 5 illustrates a method for determining a number of building platforms 6 to be used, and next an optimize arrangement of the manufacturing system 1.

As described above, the number of building platforms is determined and the arrangement of the manufacturing system can be optimized.

In particular, in reference to Figure 5, the method comprise a step 200 of receiving data about the predetermined material 3, including intrinsic properties such as viscosity, refractive index, curing path, etc.

The method further comprise a step 210 of receiving data about the curing step, and in particular the curing time.

The method further comprise a step 220 of receiving data about the layering step, and in particular the layering time.

The method further comprise a step 230 of receiving data about the number of ophthalmic devices 10 to be manufactured.

The method further comprise a step 240 of receiving data about the shape of the ophthalmic devices 10, including for instance the diameter, the outline, the curvature, the thickness and/or the orientation.

Next, the method comprises a step 250 of determining the number of building platforms 6 in function of data received on steps 210 to 240, and in particular in function of the predetermined material 3, the curing time for the single curing device 4 to cure a volume of the predetermined material 3 to form a hardened layer of at least one ophthalmic device 10, and the layering time for the layering device(s) 5 to provide a volume of the predetermined material to form a subsequent layer to be hardened of at least one ophthalmic device 10.

In addition, the method may comprise a step 260 of determining the size and/or the shape of the building platform 6 in function of the data received on steps 210 to 240, and in particular in function of the number of ophthalmic devices 10 to be manufactured and/or at least a shape of the ophthalmic devices 10, and optionally in function of the curing time and/or to the layering time of at least a layer of an ophthalmic device 10.

Optionally, the method may comprise a step 270 of determining the number of layering devices 5 at least in function of the number of building platforms 6 determined in step 250, and data received in steps 210 and 220 about the curing time and the layering time of at least a layer of an ophthalmic device 10.

Also optionally, the method may comprise a step 280 of determining an optimized arrangement of the system 1, for instance defined by a number and a type of modules 9, and in function of the data received and/or determined in the previous steps 200 to 270, for instance the predetermined material 3, the number of building platforms 6 and/or the size and the shape of each building platform 6, and/or also the number of layering devices 5, and/or the curing time and/or the layering time.

The productivity in mass production can be a focused parameter for determining the optimized arrangement of the system 1.

However, productivity cannot be detrimental to optical quality especially in the case of ophthalmic lenses.

For instance, steps 250 to 270 can be performed by fixing a number of ophthalmic devices 10 to be manufactured either in the manufacturing system or on each building platform 6, depending on the type of curing device used. Then, the layering time can be fixed for layering the ophthalmic devices 10 on one building platform 6, depending on the layering device used, and depending optionally also of the polymerisation level of the cured ophthalmic devices 10. All these parameters can be re-evaluate once the number of building platform 6 has been determined, so that to obtain an optimized arrangement of the system 1, depending on the parameter of interest, amongst productivity and quality, and compromise of both.

It should be noted more generally that the disclosure is not limited to the examples described and represented.

## Claims

1. A manufacturing system (1) configured to carry out a method for additively manufacturing a plurality of ophthalmic devices (10), the manufacturing system comprising at least one tank (2) filled with a volume of a predetermined material (3), a single curing device (4) configured for curing volumes of the predetermined material so as to harden layers of the ophthalmic devices to be manufactured, a layering device (10) configured for layering volumes of the predetermined material onto harden layers of the ophthalmic devices to be manufactured, wherein the manufacturing system comprises a determined number of building platforms (6) movable relative to the at least one tank and on which are supported the ophthalmic devices to be manufactured, the number of building platforms being determined at least in function of the predetermined material, a curing time for the single curing device to cure a volume of the predetermined material to form a hardened layer of at least one ophthalmic device, and a layering time for the layering device to provide a volume of the predetermined material to form a subsequent layer to be hardened of at least one ophthalmic device; the number of building platforms being determined so that the layering device and the single curing device are able to perform respectively a curing step and a layering step simultaneously on layers of different ophthalmic devices.

2. Manufacturing system according to claim 1, wherein it comprises a plurality of building platforms (6) distinct and movable relative to each other and to the at least one tank (1).

3. Manufacturing system according to claim 2, wherein it is configured so that the single curing device (4) is able to perform a curing step on one or several building platforms (6) while the layering device (5) is able to perform a layering step on one or several others building platforms.

4. Manufacturing system according to any one of claims 1 to 3, wherein it comprises a determined number of layering devices (5), the number of layering devices being determined in function of the number of building platforms (6), the curing time and the layering time.

5. Manufacturing system according to claim 4, wherein it comprises a layering device (5) dedicated to each or several building platforms (6).

6. Manufacturing system according to claim 5, wherein the at least one tank (2) comprises one or a plurality of compartments (8) and at least one building platform (6) is movable relative to a dedicated compartment.

7. Manufacturing system according to any one of claims 1 to 6, wherein each building platform (6) comprises a determined size and a determined shape, the size and the shape of the building platform being determined in function of a number of ophthalmic devices (10) to be manufactured and/or at least a shape of said ophthalmic devices, and in relation to the curing time and/or the layering time.

8. Manufacturing system according to claims 4 and 7, wherein it comprises a processing unit (7) which is configured to process data about the predetermined material (3), the number of building platforms (6) and/or the size and the shape of each building platform, and/or the number of layering devices (5), and/or the curing time and/or the layering time, and to provide an optimized arrangement of the manufacturing system (1).

9. Manufacturing system according to claim 8, wherein it comprises interchangeable modules (9) comprising at least a building platform (6) and optionally a dedicated layering device (5) and/or a compartment (8) of the tank (2), the number and the type of modules being determined in function of the optimized arrangement.

10. Manufacturing system according to any one of claims 1 to 9, wherein the single curing device (4) is formed by a digital light processing unit and/or a stereolithography unit including a laser source and a scanning head.

11. Manufacturing system according to any one of claims 1 to 9, wherein the layering device (5) is formed by a transparent window and optionally a membrane located in the at least one tank (1) in front of the building platform (6); or by a provider of additional material such as a recoater, or at least a print head, or at least a nozzle.

12. Method for additively manufacturing a plurality of ophthalmic devices (10), the method being carried out using the manufacturing system according to any one of claims 1 to 11 and comprising the steps of: curing a first volume of a predetermined material (3) on a first building platform (9) so as to harden a layer of one or several ophthalmic devices to be manufactured and supported on said first building platform; next curing a second volume of the predetermined material on a second building platform (9) which is distinct and movable relative to the first building platform, so as to harden a layer of one or several other ophthalmic devices to be manufactured and supported on said second building platform, said curing steps being performed successively by a single curing device (4); and layering a second volume of the predetermined material adjacent to the hardened layer located on said first building platform, said layering step being performed, thanks to a layering device (5) and to a displacement of said first building platform together with the hardened layer, at the latest when the curing of the layer of said one or several ophthalmic devices supported on said first building platform is finished and during the step of curing the layer of said one or several another ophthalmic devices supported on said second building platform.

13. Method according to claim 12, wherein the layering step is performed during the same time for each layer of the ophthalmic devices (10) manufactured on the building platforms (6).

14. Method according to one of claims 12 and 13, wherein the steps of curing is performed by projecting and/or scanning and polymerizing at least one image on a surface of a volume of the predetermined material.

15. Method according to claim 14, wherein depending on the curing device, the steps of curing is performed in a step mode, or in a scroll mode, or in a hatching mode.

## Patentansprüche

1. Fertigungssystem (1), gestaltet zur Durchführung eines Verfahrens zur additiven Fertigung einer Vielzahl von ophthalmischen Vorrichtungen (10), wobei das Fertigungssystem wenigstens einen Tank (2), der mit einem Volumen eines vorgegebenen Materials (3) gefüllt ist, eine einzige Härtungsvorrichtung (4), die zum Härten von Volumina des vorgegebenen Materials gestaltet ist, um Schichten der herzustellenden ophthalmischen Vorrichtungen zu härten, eine Schichtvorrichtung (10), die zum Schichten von Volumina des vorgegebenen Materials auf gehärtete Schichten der herzustellenden ophthalmischen Vorrichtungen gestaltet ist, umfasst, wobei das Fertigungssystem eine bestimmte Anzahl von Bauplattformen (6) umfasst, die relativ zu dem wenigstens einen Tank beweglich sind und auf denen die herzustellenden ophthalmischen Vorrichtungen getragen werden, wobei die Anzahl von Bauplattformen wenigstens abhängig bestimmt wird von dem vorgegebenen Material, einer Härtungszeit für die einzelne Härtungsvorrichtung zum Härten eines Volumens des vorgegebenen Materials, um eine gehärtete Schicht von wenigstens einer ophthalmischen Vorrichtung zu bilden, und einer Schichtzeit für die Schichtvorrichtung zum Bereitstellen eines Volumens des vorgegebenen Materials, um eine nachfolgende Schicht zu bilden, die von wenigstens einer ophthalmischen Vorrichtung gehärtet werden soll; wobei die Anzahl der Bauplattformen so bestimmt wird, dass die Schichtvorrichtung und die einzelne Härtungsvorrichtung jeweils einen Härtungsschritt und einen Schichtschritt gleichzeitig an Schichten verschiedener ophthalmischer Vorrichtungen durchführen können.

2. Fertigungssystem nach Anspruch 1, umfassend eine Vielzahl von Bauplattformen (6), die voneinander verschieden und relativ zueinander und zu dem wenigstens einen Tank (2) beweglich sind.

3. Fertigungssystem nach Anspruch 2, dafür gestaltet, dass die einzelne Härtungsvorrichtung (4) fähig ist, einen Härtungsschritt auf einer oder mehreren Bauplattformen (6) durchzuführen, während die Schichtvorrichtung (5) fähig ist, einen Schichtschritt auf einer oder mehreren anderen Bauplattformen durchzuführen.

4. Fertigungssystem nach einem der Ansprüche 1 bis 3, umfassend eine bestimmte Anzahl von Schichtvorrichtungen (5), wobei die Anzahl von Schichtvorrichtungen abhängig von der Anzahl von Bauplattformen (6), der Härtungszeit und der Schichtzeit bestimmt wird.

5. Fertigungssystem nach Anspruch 4, umfassend eine Schichtvorrichtung (5), die zu jeder oder mehreren Bauplattformen (6) zugehörig ist.

6. Fertigungssystem nach Anspruch 5, wobei der wenigstens eine Tank (2) ein oder eine Vielzahl von Kompartimenten (8) umfasst und wenigstens eine Bauplattform (6) relativ zu einem zugehörigen Kompartiment beweglich ist.

7. Fertigungssystem nach einem der Ansprüche 1 bis 6, wobei jede Bauplattform (6) eine bestimmte Größe und eine bestimmte Form umfasst, wobei die Größe und die Form der Bauplattform abhängig von einer Anzahl von herzustellenden ophthalmischen Vorrichtungen (10) und/oder wenigstens einer Form der ophthalmischen Vorrichtungen und in Bezug auf die Härtungszeit und/oder die Schichtzeit bestimmt werden.

8. Fertigungssystem nach Anspruch 4 und 7, umfassend eine Verarbeitungseinheit (7), die dafür gestaltet ist, Daten über das vorgegebene Material (3), die Anzahl von Bauplattformen (6) und/oder die Größe und die Form jeder Bauplattform und/oder die Anzahl von Schichtvorrichtungen (5) und/oder die Härtungszeit und/oder die Schichtzeit zu verarbeiten und eine optimierte Anordnung des Fertigungssystems (1) bereitzustellen.

9. Fertigungssystem nach Anspruch 8, umfassend austauschbare Module (9), die wenigstens eine Bauplattform (6) und gegebenenfalls eine zugehörige Schichtvorrichtung (5) und/oder ein Kompartiment (8) des Tanks (2) umfassen, wobei die Anzahl und der Typ von Modulen abhängig von der optimierten Anordnung bestimmt werden.

10. Fertigungssystem nach einem der Ansprüche 1 bis 9, wobei die einzelne Härtungsvorrichtung (4) von einer digitalen Lichtverarbeitungseinheit und/oder einer Stereolithographieeinheit, die eine Laserquelle und einen Abtastkopf enthält, gebildet wird.

11. Fertigungssystem nach einem der Ansprüche 1 bis 9, wobei die Schichtvorrichtung (5) durch ein transparentes Fenster und gegebenenfalls eine Membran gebildet wird, die in dem wenigstens einen Tank (2) vor der Bauplattform (6) angeordnet ist; oder durch einen Vorrichtung zur Bereitstellung von zusätzlichem Material, wie z.B. einen Beschichter oder wenigstens einen Druckkopf oder wenigstens eine Düse.

12. Verfahren zur additiven Fertigung einer Vielzahl von ophthalmischen Vorrichtungen (10), wobei das Verfahren unter Verwendung des Fertigungssystems nach einem der Ansprüche 1 bis 11 durchgeführt wird und die Schritte umfasst: Härten eines ersten Volumens eines vorgegebenen Materials (3) auf einer ersten Bauplattform (6), um eine Schicht einer oder mehrerer ophthalmischer Vorrichtungen, die auf der ersten Bauplattform gefertigt und getragen werden sollen, zu härten; anschließend Härten eines zweiten Volumens des vorgegebenen Materials auf einer zweiten Bauplattform (6), die von der ersten Bauplattform verschieden und relativ dazu beweglich ist, um eine Schicht von einer oder mehreren anderen ophthalmischen Vorrichtungen, die auf der zweiten Bauplattform gefertigt und getragen werden sollen, zu härten, wobei die Härtungsschritte nacheinander durch eine einzige Härtungsvorrichtung (4) durchgeführt werden; und Schichten eines zweiten Volumens des vorgegebenen Materials angrenzend an die gehärtete Schicht, die sich auf der ersten Bauplattform befindet, wobei der Schichtungsschritt mithilfe einer Schichtvorrichtung (5) und einer Verschiebung der ersten Bauplattform zusammen mit der gehärteten Schicht durchgeführt wird, spätestens wenn das Härten der Schicht der einen oder mehreren auf der ersten Bauplattform getragenen ophthalmischen Vorrichtungen beendet ist und während des Schritts des Härtens der Schicht der einen oder mehreren anderen auf der zweiten Bauplattform getragenen ophthalmischen Vorrichtungen.

13. Verfahren nach Anspruch 12, wobei der Schritt des Schichtens gleichzeitig für jede Schicht der ophthalmischen Vorrichtungen (10), die auf den Bauplattformen (6) gefertigt werden, durchgeführt wird.

14. Verfahren nach einem der Ansprüche 12 und 13, wobei die Schritte des Härtens durch Projizieren und/oder Scannen und Polymerisieren wenigstens eines Bildes auf eine Oberfläche eines Volumens des vorgegebenen Materials durchgeführt werden.

15. Verfahren nach Anspruch 14, wobei abhängig von der Härtungsvorrichtung die Schritte des Härtens in einem Schrittmodus oder in einem Scrollmodus oder in einem Schraffurmodus durchgeführt werden.

## Revendications

1. Système de fabrication (1) conçu pour réaliser un procédé de fabrication additive d'une pluralité de dispositifs ophtalmiques (10), le système de fabrication comprenant au moins un réservoir (2) rempli d'un volume d'un matériau prédéterminé (3), un unique dispositif de durcissement (4) conçu pour durcir des volumes du matériau prédéterminé de manière à solidifier des couches des dispositifs ophtalmiques devant être fabriqués, un dispositif de dépôt en couches (10) conçu pour déposer en couches des volumes du matériau prédéterminé sur des couches solidifiées des dispositifs ophtalmiques devant être fabriqués, le système de fabrication comprenant un nombre déterminé de plates-formes de construction (6) mobiles par rapport à l'au moins un réservoir et par lesquelles sont supportés les dispositifs ophtalmiques devant être fabriqués, le nombre de plates-formes de construction étant déterminé au moins en fonction du matériau prédéterminé, d'un temps de durcissement nécessaire à l'unique dispositif de durcissement pour durcir un volume de matériau prédéterminé afin de former une couche solidifiée d'au moins un dispositif ophtalmique, et d'un temps de dépôt en couches nécessaire au dispositif de dépôt en couches pour fournir un volume du matériau prédéterminé afin de former une couche suivante devant être solidifiée d'au moins un dispositif ophtalmique ; le nombre de plates-formes de construction étant déterminé de telle sorte que le dispositif de dépôt en couches et l'unique dispositif de durcissement peuvent effectuer respectivement une étape de durcissement et une étape de dépôt en couches simultanément sur des couches de différents dispositifs ophtalmiques.

2. Système de fabrication selon la revendication 1, qui comprend une pluralité de plates-formes de construction (6) distinctes et mobiles les unes par rapport aux autres et par rapport à l'au moins un réservoir (2).

3. Système de fabrication selon la revendication 2, qui est conçu de telle sorte que l'unique dispositif de durcissement (4) peut effectuer une étape de durcissement sur une ou plusieurs plates-formes de construction (6) pendant que le dispositif de dépôt en couches (5) peut effectuer une étape de dépôt en couches sur une ou plusieurs autres plates-formes de construction.

4. Système de fabrication selon l'une quelconque des revendications 1 à 3, qui comprend un nombre déterminé de dispositifs de dépôt en couches (5), le nombre de dispositifs de dépôt en couches étant déterminé en fonction du nombre de plates-formes de construction (6), du temps de durcissement et du temps de dépôt en couches.

5. Système de fabrication selon la revendication 4, qui comprend un dispositif de dépôt en couches (5) dédié à chaque plate-forme de construction (6) ou à plusieurs d'entre elles.

6. Système de fabrication selon la revendication 5, dans lequel l'au moins un réservoir (2) comprend un compartiment ou une pluralité de compartiments (8) et au moins une plate-forme de construction (6) est mobile par rapport à un compartiment dédié.

7. Système de fabrication selon l'une quelconque des revendications 1 à 6, dans lequel chaque plate-forme de construction (6) présente une taille déterminée et une forme déterminée, la taille et la forme de la plate-forme de construction étant déterminées en fonction d'un nombre de dispositifs ophtalmiques (10) devant être fabriqués et/ou au moins d'une forme desdits dispositifs ophtalmiques, et par rapport au temps de durcissement et/ou au temps de dépôt en couches.

8. Système de fabrication selon les revendications 4 et 7, qui comprend une unité de traitement (7) qui est conçue pour traiter des données sur le matériau prédéterminé (3), le nombre de plates-formes de construction (6) et/ou la taille et la forme de chaque plate-forme de construction, et/ou le nombre de dispositifs de dépôt en couches (5), et/ou le temps de durcissement et/ou le temps de dépôt en couches, et pour proposer un agencement optimisé du système de fabrication (1).

9. Système de fabrication selon la revendication 8, qui comprend des modules interchangeables (9) comprenant au moins une plate-forme de construction (6) et éventuellement un dispositif de dépôt en couches (5) dédié et/ou un compartiment (8) du réservoir (2), le nombre et le type de modules étant déterminés en fonction de l'agencement optimisé.

10. Système de fabrication selon l'une quelconque des revendications 1 à 9, dans lequel l'unique dispositif de durcissement (4) est constitué d'une unité de traitement numérique par la lumière et/ou d'une unité de stéréolithographie comportant une source laser et une tête de balayage.

11. Système de fabrication selon l'une quelconque des revendications 1 à 9, dans lequel le dispositif de dépôt en couches (5) est constitué d'une fenêtre transparente et éventuellement d'une membrane située dans l'au moins un réservoir (2) devant la plate-forme de construction (6) ; ou d'un dispositif de fourniture de matériau supplémentaire tel qu'un racleur, ou au moins une tête d'impression, ou au moins une buse.

12. Procédé de fabrication additive d'une pluralité de dispositifs ophtalmiques (10), le procédé étant réalisé au moyen du système de fabrication selon l'une quelconque des revendications 1 à 11 et comprenant les étapes suivantes : durcissement d'un premier volume d'un matériau prédéterminé (3) sur une première plate-forme de construction (6) de manière à solidifier une couche d'un ou plusieurs dispositifs ophtalmiques devant être fabriqués et supportés par ladite première plate-forme de construction ; ensuite, durcissement d'un deuxième volume du matériau prédéterminé sur une deuxième plate-forme de construction (6), qui est distincte de la première plate-forme de construction et mobile par rapport à celle-ci, de manière à solidifier une couche d'un ou plusieurs autres dispositifs ophtalmiques devant être fabriqués et supportés par ladite deuxième plate-forme de construction, lesdites étapes de durcissement étant effectuées successivement par un unique dispositif de durcissement (4) ; et dépôt en couches d'un deuxième volume du matériau prédéterminé au voisinage de la couche solidifiée située sur ladite première plate-forme de construction, ladite étape de dépôt en couches étant effectuée, grâce à un dispositif de dépôt en couches (5) et à un déplacement de ladite première plate-forme de construction conjointement avec la couche solidifiée, au plus tard lorsque le durcissement de la couche dudit ou desdits dispositifs ophtalmiques supportés par ladite première plate-forme de construction est terminé et pendant l'étape de durcissement de la couche dudit ou desdits autres dispositifs ophtalmiques supportés par ladite deuxième plate-forme de construction.

13. Procédé selon la revendication 12, dans lequel l'étape de dépôt en couches est effectuée en même temps pour chaque couche des dispositifs ophtalmiques (10) fabriqués sur les plates-formes de construction (6).

14. Procédé selon une des revendications 12 et 13, dans lequel les étapes de durcissement sont effectuées par projection et/ou balayage et polymérisation d'au moins une image sur une surface d'un volume du matériau prédéterminé.

15. Procédé selon la revendication 14 dans lequel, selon le dispositif de durcissement, les étapes de durcissement sont effectuées dans un mode pas à pas, ou dans un mode défilement, ou dans un mode hachurage.
